Europäisches Patentamt

European Patent Office

Office européen des brevets

(19)

(11) Publication number: 0 211 575
A2

# EUROPEAN PATENT APPLICATION

(21) Application number: 86305707.1

(22) Date of filing: 24.07.86

(51) Int. Cl.4: **C04B 30/02** , C04B 26/02 , C04B 28/26 , C04B 38/02 , //(C04B30/02,14:38,22:08,24:26-,24:38),(C04B26/02,14:38,22:08-,24:38),(C04B28/26,14:38,22:08-,24:26,24:38)

(30) Priority: 07.08.85 US 763750

(43) Date of publication of application:
25.02.87 Bulletin 87/09

(84) Designated Contracting States:
DE FR GB IT

(71) Applicant: **THE BABCOCK & WILCOX COMPANY**
**1010 Common Street P.O. Box 60035**
**New Orleans Louisiana 70160(US)**

(72) Inventor: **Widener, Joseph**
**526 Laverne Avenue**
**Belvedere South Carolibna 29841(US)**
Inventor: **Malone, Russell Michael**
**3105 Exeter Drive**
**Augusta Georgia 30909(US)**

(74) Representative: **Purvis, William Michael Cameron et al**
**D. Young & Co. 10 Staple Inn**
**London WC1V 7RD(GB)**

(54) Foamed refractory product.

(57) A foamed refractory product which is resilient is produced from a mixture of a first component consisting essentially of a mineral fibre, an elastomeric compound, a suspending agent, a material that will react with mineral acid and give off a gas, and a liquid solvent; and a second component consisting essentially of a mineral acid, the ratio of the first component to the second component ranging from 2:1 to 5:1.

## FOAMED REFRACTORY PRODUCT

The invention relates to heat resistant materials and products, and more particularly foamed insulating refractories.

Foamed refractory products are typically produced by either mechanically introducing a gas, such as air, into a pre-mixed slurry of refractory materials, or by including in a slurry, one or more compounds which will chemically react upon mixing to create a gaseous foaming effect.

Where electrical cable or conduit pipe passes through a wall or bulkhead of a facility, some type of seal is usually used to protect the cabling, especially from the spread of fire.

For some time, a need has existed for a low-cost, fireproofing material for such cable penetration seals, conduit pipes, and the like which would combine low thermal conductivity, high temperature resistance, resiliency, and other desirable properties. This material would be useful in commercial, industrial and utility applications.

At present, a silicone foam is commonly employed to form the seals. However, silicone foam suffers from several deficiencies. Silicone is 100% organic and during a fire, it burns away. In order to obtain adequate protection, a very thick layer of silicone foam must be placed between the potential fire and the area to be protected, and because of the high cost of silicone foam, such a thick section is not desirable. In addition, current silicone foams are difficult to install and give off objectionable odours during placement. Inorganic foam insulating refractories would be interesting for these type applications because they are inexpensive and would not burn away during a fire, but generally they lack the resiliency of organic materials.

Various inorganic foamed insulating refractories also appear in the art.

US-A-3 148 996 (Vukasovich et al) discloses a combination of wollastonite, aluminum phosphate solution and Alkophos-CE, produced by Monsanto Company, which combination is mixed and then allowed to stand for about five minutes. After partial setting, powered calcium carbonate is added. The evolution of carbon dioxide creates a foaming action and the material hardens in about ten minutes. However, the resulting material has no resiliency.

US-A-3 223 537 (Weigert et al) teaches the mixing of between 25% and 31% alumina, 30% to 40% alumina trihydrate, .01% to .1% aluminum powder and 8% to 14% water to form a slurry, which is then reacted with phosphoric acid. Again, a non-resilient foam results.

US-A-3 625 723 (Sicka) discloses a foamed ceramic comprising fly ash and phosphoric acid, and wherein wollastonite is used as a filler. A relatively dense product of 25 to 45 lbs/cubic feet, with no resiliency, is produced.

US-A-4 425 291 (Beer et al) discloses a sodium silicate solution, inorganic fillers, a wetting agent, a hardening compound and a natural latex dispersion. The mixture is mechanically foamed using an inert gas. A natural latex dispersion is added for dimensional stability, mechanical strength and waterproofness. The need for mechanical action makes the placement of such a foam in areas such as cable penetrations almost impossible because the foam must be formed first. The material, once foamed, is difficult to force into tight areas to achieve complete filling without breaking down the foam.

According to one aspect of the invention there is provided a foamed refractory product characterised in that it is produced from a mixture comprising a first component consisting essentially by weight of 0% to 35% mineral fibre, between 0% and 50% elastomeric compound, between 0% and 0.3% suspending agent, between 0% and 20% of a material that will react with mineral acid and give off a gas, and a liquid solvent; and a second component consisting essentially of a mineral acid, the ratio of the first component to the second component being between 2:1 to 5:1.

The refractory product of the invention can exhibit resiliency, resistance to vibrational stress, plus the fire resistance of ceramic materials through a unique composite foam. Preferably the product can be installed by pumping material into an area with cable, pipes or any voids and causing the material to foam in place to achieve a complete seal. The product experiences no appreciable shrinkage upon air drying, but does become resilient. This resiliency is important because the foam refractory product must be able to withstand the vibration and flexure that occur on cables and piping, while the lack of shrinkage can ensure that a tight seal is retained.

The product may be placed at an economically attractive thickness to provide one hour of fire protection in a standard ASTM E119 fire test and maintain structural integrity.

According to another aspect of the invention there is provided a foamed refractory product characterised in that it is produced from a mixture comprising a first component consisting essentially by weight of about 35% mineral fibre, about 9% elastomeric compound, about 0.3% suspending agent, about 2.3% by weight of a material that will react with mineral acid and give off a gas, and about 53% water; and a second component consisting essentially of a mineral acid, the ratio of the first component to the second componnent being about 3:1.

Advantageously the product provided by the invention is a resilient, principally inorganic composition, that will foam, rise and set in moulds and around cables, and provide a tough resilient product that withstands temperatures of 1093°C - (2000°F) or higher without degrading, and has a low thermal conductivity and high flame proofness.

Preferably, about 35% by weight of a mineral fibre is mixed with about 9% by weight of an elastomeric compound, about 0.3% by weight of a suspending agent, about 2.3% by weight of a material that will react with mineral acid and give off a gas, and a liquid solvent. The resulting slurry mixture is then mixed with mineral acid. The ratio of the slurry mixture to the mineral acid is about 3:1.

A preferred mineral fibre is wollastonite, a calcium silicate mineral. Nyad G. wollastonite, supplied by NYCO Corporation, is a suitable form of this mineral. Another example is VANSIL fibre supplied by R T Vanderbilt Company, Inc. Wollastonite varies in calcium carbonate content. It has been found that wollastonites such as Nyad G, with a somewhat lower calcium carbonate content, are particularly suitable for use in the product of the invention. The lower calcium carbonate leads to a better controlled foaming of the slurry mix after introduction of the phosphoric acid into the mixture. Because wollastonite acts in part as a foaming agent, a lower wollastonite content would result in less foaming during mixing and therefore, a denser product. The use of a finer fibre wollastonite, such as Nyad 400 instead of Nyad G, would improve the foaming action of the composition as a result of increased surface area, thus exposing more calcium carbonate for reaction, but thermal conductivity and density of the resulting refractory product would increase because of the higher bulk density of the Nyad 400 wollastonite overriding its total foaming effect. Finer fibres would also necessitate greater amounts of the elastomeric compound to maintain comparable resiliency in the final product.

Other mineral fibres that may be substituted in whole or in part for wollastonite include for example, alumina fibres, glass fibres, chopped aluminosilicate fibre (e.g. KAOWOOL ceramic fibre manufactured by The Babcock & Wilcox Company) and mineral wool. Thus, the mineral fibres may be either manmade or natural. The use of lower-grade fibres, such as mineral wool, or glass fibres, would result in a concomitant drop in the temperature use limit of the refractory product, Inert minerals, such as calcined kaolin or calcined bauxite, can be substituted for the wollastonite in part or in whole, if a denser product is desired.

Two preferred latices for use in conjunction with the invention are 2671 latex, a strongly anionic acrylic latex produced by B F Goodrich Company; and 115 Neoprene latex, a non-ionic polychloroprene latex produced by E I du Pont Nemours. A key to optimal foaming of the slurry mixture in reaction with the mineral acid is the use of slightly anionic latex components, If the latex or other elastomeric compound were totally non-ionic, the foam would tend to be watery and settle as the foaming process came to completion. Conversely, if the latex were very anionic, the foam would have a tendency to set in the application nozzle and come out of the nozzle in the manner of an extruded clay. Thus, 2671 latex and 115 Neoprene latex are a preferred blend of latices to achieve optimal foaming of the composition. The 2671 latex should be present in an amount no greater than about 3%. Above this amount, undesirable flocculation of the slurry mixture can occur. The 115 Neoprene latex may be present in amounts ranging from about 0% to 10% by weight. Any non-ionic latex may be substituted for 115 Neoprene latex provided it has a sufficiently low glass transition temperature so as to permit the end product to be relatively resilient at room temperature. More generally, other elastomeric compounds may be substituted for the two latices, e.g. acrylic, acrylonitrile, styrene butadiene rubber latex, polychloroprene, and nitrile latex. Latex is costly so that the higher the total content of latex in the slurry mix, the more costly will be the refractory product. Higher total latex content also results in more pathways for heat emission. A lower total latex content leads to a less resilient refractory product, but one with superior heat resistance.

Methyl cellulose, such as Methocel produced by Dow Chemical Co., is a suitable suspending agent for use in the product of the invention. If no suspending agent is used, the mixed slurry would have no pot life and would require remixing before use with mineral acid. Above about 0.3% content, the suspending agent would create a slurry mixture with too high a viscosity. The viscosity of the mixture increases geometrically as the amount of suspending agent is increased.

Other suspending agents suitable for use in the product of the invention include, for example, sodium alginate, xanthan gum, bentonite, or cationic polymers.

A preferred example of a material that will react with a mineral acid and give off a gas is sodium silicate. One type of sodium silicate is GD sodium silicate supplied by Philadelphia Quartz Corporation. Generally, a minimum amount of sodium silicate is all that is required to generate sufficient foaming to allow the foam to fill substantially all the voids around a set of cables to be insulated, not to hinder the resiliency of the placed foam, and to act as a latent binder when the lining is subjected to a fire or heat. Beyond 20 weight % of sodium silicate, the foaming refractory would set too quickly.

Phosphoric acid is a suitable mineral acid to be used as the second component of the mixture. Typically, the phosphoric acid is at 75% solution. The optimal ratio of the first component (slurry mixture) to the second component (mineral acid) is 3:1, but ratios of about 2:1 to 5:1 are acceptable. A ratio of less than 2:1 produces a refractory product with a very low density and that is extremely weak. Ratios between 2:1 and 5:1 produce the desired product. Greater than 5:1, a refractory product of higher density results from less foaming activity because of the relatively low availability of mineral acid. Of course, changes in the percent solution of the mineral acid, e.g. 85% instead of 75% solution, would require suitable adjustments in the ratios just discussed. Other mineral acids, such as nitric and sulphuric acid can be used also.

The product may be prepared following generally the methodology disclosed in US-A-4 341 561 (Britt et al) wherein dry ingredients are mixed first, then water is added and the resulting slurry is mixed in a passive mixer with acid, typically 75% phosphoric acid. The mixture is immediately discharged from the passive mixer into place and allowed to foam and set. While in the Britt et al invention, the dry ingredients are prepackaged and then mixed on-site with water and then acid, the product of the invention would preferably be a prepackaged, stabilized slurry, not just a dry mix, available for mixing on-site with a mineral acid.

A passive mixer shorter than that disclosed in Britt et al would be used because the product of the invention foams and sets up rather quickly. The product of the invention does not utilize a cement binder, which would generate a stiff refractory without the desired resiliency and flexibility.

After foaming of the mixture is completed, no separate and additional curing step is required, only in-situ air curing. The final refractory product is characterized by good acid resistance, good resiliency, good 30 strength, low thermal conductivity, flame-proofness, a high continuous heating limit, and a density of 256 kg/m³ (16 pounds per cubic foot) or higher depending on the degree of foaming.

In a cable penetration seal application in a wall, ceiling or floor, a temporary form may be used to hold the foaming material until it sets. In the case of a "blank" hole in which cables or pipes have not yet been placed, a suitable material such as plywood may be used to form a mould for the foaming material. Then a hole may be bored through the refractory product and plugged for later installation of the cabling, conduit, etc. In another case, where the hole already contains cables or pipes, a two-segment structure may be built with appropriate cut-out and bowed portions to create the outside diameter of the seal. A small hole may be made, for example, in the top of the form for introduction of the foaming mixture.

In addition to the suitability of the mixture for pumping into a mould, the foaming mix can be sprayed on metal, concrete, or wooden walls. The mix displays a high adherence to wall faces. This characteristic, combined with its excellent fireproofing traits, makes the product of the invention an excellent product for fireproofing spray coatings for commercial and industrial buildings.

## Claims

1. A foamed refractory product characterised in that it is produced from a mixture comprising a first component consisting essentially by weight of 0% to 35% mineral fibre, between 0% and 50% elastomeric compound, between 0% and 0.3% suspending agent, between 0% and 20% of a material that will react with mineral acid and give off a gas, and a liquid solvent; and a second component consisting essentially of a mineral acid, the ratio of the first component to the second component being between 2:1 to 5:1.

2. A foamed refractory product according to claim 1, wherein he fibre is wollastonite.

3. A foamed refractory product according to claim 1, wherein the elastomeric compound is latex.

4. A foamed refractory product according to claim 1, wherein the suspending agent is methyl cellulose.

5. A foamed refractory product according to claim 1, wherein the material that will react with mineral acid and give off a gas also acts as a latent binder when subjected to fire or heat.

6. A foamed refractory product according to claim 5, wherein the material that will react with mineral acid and give off a gas is sodium silicate.

7. A foamed refractory product according to claim 1, wherein the liquid solvent is water.

8. A foamed refractory product according to claim 1, wherein the mineral acid is phosphoric acid.

9. A foamed refractory product characterised in that it is produced from a mixture comprising a first component consisting essentially by weight of about 35% mineral fibre, about 9% elastomeric compound, about 0.3% suspending agent, about 2.3% by weight of a material that will react with mineral acid and give off a gas, and about 53% water; and a second component consisting essentially of a mineral acid, the ratio of the first component to the second componnent being about 3:1.

10. A foamed refractory product according to claim 9, wherein the mineral fibre is wollastonite.

11. A foamed refractory product according to claim 9, wherein the elastomeric compound is latex.

12. A foamed refractory product according to claim 9, wherein the suspending agent is methyl cellulose.

13. A foamed refractory product according to claim 9, wherein the material that will react with mineral acid and give off a gas also acts as a latent binder when subjected to a fire or heat.

14. A foamed refractory product according to claim 13, wherein the material that will react with mineral acid and give off a gas is sodium silicate.

15. A foamed refractory product according to claim 9, wherein the liquid solvent is water.

16. A foamed refractory product according to claim 9, wherein the mineral acid is phosphoric acid.

17. A foamed refractory product according to claim 9, wherein the mineral acid is nitric acid.

18. A foamed refractory product according to claim 9, wherein the mineral acid is hydrochloric acid.

19. A foamed refractory product according to claim 9, wherein the mineral acid is sulphuric acid.